Europäisches Patentamt

European Patent Office

Office européen des brevets

(19)

(11) Veröffentlichungsnummer: **0 081 191**
**B1**

(12) **EUROPÄISCHE PATENTSCHRIFT**

(45) Veröffentlichungstag der Patentschrift:
12.03.86

(21) Anmeldenummer: **82111086.3**

(22) Anmeldetag: **01.12.82**

(51) Int. Cl.⁴: **F 16 L 59/14**

(54) **Längsgeteilter Schlauch aus schrumpfbarem Material mit Verschlusselementen entlang der Längsränder.**

(30) Priorität: **04.12.81 DE 3148135**

(43) Veröffentlichungstag der Anmeldung:
**15.06.83 Patentblatt 83/24**

(45) Bekanntmachung des Hinweises auf die Patenterteilung:
**12.03.86 Patentblatt 86/11**

(84) Benannte Vertragsstaaten:
**BE FR GB IT NL SE**

(56) Entgegenhaltungen:
**EP - A - 0 023 418**
**EP - A - 0 056 080**
**DE - B - 1 251 605**
**DE - U - 7 438 232**
**US - A - 2 160 009**
**US - A - 3 347 276**

(73) Patentinhaber: **Siemens Aktiengesellschaft, Berlin und München Wittelsbacherplatz 2, D-8000 München 2 (DE)**

(72) Erfinder: **Förtsch, Johann, Dipl.-Ing., Dennig 6, D-8640 Kronach-Friesen (DE)**
Erfinder: **Meltsch, Hans-Jürgen, Odinstrasse 26, D-8034 Germering (DE)**

## Beschreibung

Die Erfindung betrifft einen längsgeteilten Schlauch aus schrumpfbarem Material, der entlang seiner beiden Längsränder Verstärkungseinlagen und mehrere aus Haken- und Rastelementen bestehende Verschlusselemente aufweist, wobei die am ersten Längsrand angeordneten Hakenelemente in die als Ausschnitte ausgebildeten Rastelemente des zweiten Längsrandes eingreifen.

Aus der am 1. 7. 1982 veröffentlichten deutschen Offenlegungsschrift 30 48 051, die der am 21. 7. 1982 veröffentlichten europäischen Patentanmeldung 00 56 080 entspricht, ist ein Muffenrohr der oben beschriebenen Art bekannt, wobei hier die Längsränder überlappend angeordnet sind, der eine Rand mit Hakenelementen und der zweite Rand mit gegenüber liegenden Rastelementen versehen sind. Dabei sind die Haken- und Rastelemente in bezw. an mechanischen Verstärkungen angeordnet, die entlang der Längsränder mit dem Muffenrohr fest verbunden sind. Die Hakenelemente am ersten Längsrand dieses Muffenrohres sind als Stifte mit Verdickungen an ihren Enden, die Rastelemente am zweiten Längsrand sind als Löcher ausgebildet, in welche die Stifte des ersten Längsrandes eingreifen. Dies hat einen gewissen Nachteil bezüglich der Festigkeit bei der Schrumpfung, da der Kraftangriff jeweils nur punktförmig erfolgt. Weiterhin sind hierin auch Ausführungsbeispiele bekannt, bei denen die Hakenelemente über den gesamten Längsrand verlaufen. Hierbei leidet jedoch besonders die Flexibilität der Verschlussanordnung.

Weiterhin ist aus der europäischen Patentanmeldung 00 23 418 eine längsgeteilte Hülle aus schrumpfbarem Material bekannt, die entlang des einen Längsrandes ein Klammerelement aufweist, das mit einem am zweiten Längsrand befestigten weiteren Klammerelement in Eingriff gebracht wird. Dabei ist das erste Klammerelement als vorspringende, hakenartige Ausformung und das zweite Klammerelement als dazu passende Nut in einem ebenfalls vorspringenden Verschlussteil ausgebildet. Beide Klammerelemente sind schienenförmig ausgebildet und an den Oberflächen der beiden Längsränder befestigt. Auch diese Verschlussart schränkt die Flexibilität während des Schrumpfens im Verschlussbereich in gewissem Masse ein.

So liegt nun der Erfindung die Aufgabe zugrunde, einen längsgeteilten Schlauch der eingangs beschriebenen Art zu schaffen, bei dem der längsseitige Verschluss einfach und bereits bei der Montage sicher verhakt ist und beim Schrumpfvorgang nicht mehr aufgehen kann, wobei die einzelnen Verschlusselemente einen möglichst grossen Bereich unter Beibehaltung grosser Flexibilität des gesamten Verschlusssystems erfassen sollen, um eine gleichmässige Verteilung der Schrumpfkräfte zu erhalten.

Die gestellte Aufgabe wird nun durch die Erfindung mit einem längsgeteilten Schlauch, wie er eingangs beschrieben ist, dadurch gelöst, dass die Hakenelemente Befestigungslaschen mit Gegenlagern aufweisen, die jeweils bis zum Gegenlager in axial verlaufende Schlitze im Bereich der Verstärkungseinlage eingebracht und verankert sind und dass jedes Hakenelement einen vom ersten Längsrand abstehenden Verschlussteil mit jeweils mindestens einer Verriegelung für den mit seinen Ausschnitten übergesteckten Längsrand aufweist.

Bei den Ausführungsformen gemäss der Erfindung ist vorteilhaft, dass die abstehenden Hakenelemente als selbständige Teile gefertigt werden können, die dann nach der Herstellung des Schlauches aus Schrumpfmaterial in sehr einfacher Weise eingesetzt und verankert werden können. Die Hakenelemente sind in ihrer Form recht schmal gehalten, und werden in Achsrichtung des Schlauches in die Verstärkungen bzw. in Schlitze der Verstärkungen entlang der Längsränder des Schlauches eingebracht. Dies bedeutet, dass die Verstärkungen entlang der Längsränder ebenfalls sehr schmal gehalten werden können, wodurch die Flexibilität im Verschlusssystem verbessert ist. Durch die Art der Ausbildung der Verschlusselemente wird erreicht, dass sich die abstehenden Hakenelemente des einen Längsrandes nicht durch die im Verschlussbereich eingesetzte Verstärkung hindurchdrücken können. Dies erfolgt durch entsprechende Ausbildung von Gegenlagern. Weiterhin erfolgt durch die Befestigungslaschen der Hakenelemente auf der Gegenseite dieses Längsrandes eine ausreichende Fixierung in radialer Richtung. Weiterhin besitzen die Hakenelemente gemäss der Erfindung Verriegelungen, die nach dem Einhaken des zweiten Längsrandes wirksam werden und die als abstehende oder überstehende Teile des Hakenelementes ausgebildet sind. Auf diese Weise ergibt sich beim Überstülpen des zweiten Längsrandes mit seinen entsprechenden Ausschnitten eine Schnappverbindung der beiden Längsränder, so dass ein Aufgehen der Verbindung während des Schrumpfvorganges verhindert wird. Die Erweichung des Schrumpfmaterials im Verschlussbereich bleibt auf die Verschlusselemente bzw. auf den Verschluss insgesamt unwirksam, da diese in den formfesten Verstärkungen der Längsränder eingebracht sind. Diese Verstärkungen bestehen zum Beispiel aus Blechen, die entweder gelocht oder ungelocht sind und die eventuell mit einem Haftvermittler versehen werden können. Auf diese Weise wird eine gute Haftung zwischen dem Schrumpfmaterial und den Verstärkungen gewährleistet. Die Verstärkungen entlang der Längsränder können jedoch auch aus temperaturbeständigen Geweben, zum Beispiel aus Metall, Glasfaser, duroplastischen Kunststoffen oder hochtemperaturfesten Thermoplasten gebildet werden. Diese Gewebe werden bei Bedarf durch Tränken, Tauchen oder durch Beschichtungen mit geeigneten Materialien zusätzlich versteift.

Die Erfindung wird nun anhand von vierundzwanzig Figuren näher erläutert.

Die Figur 1 verdeutlicht einen längsgeteilten Schlauch mit dem Verschlusssystem gemäss Erfindung.

Die Figuren 2 und 3 erläutern die Verschlussbereiche mit überlappenden Längsrändern.

Die Figuren 4 bis 21 zeigen Ausführungsbeispiele für die einzelnen Verschlusselemente.

Die Figuren 22 und 23 verweisen auf ein Beispiel mit Verschlusselementen, durch die das Überlappen der Längsränder vermieden werden kann.

Die Figur 24 zeigt ein weiteres Verschlusselement.

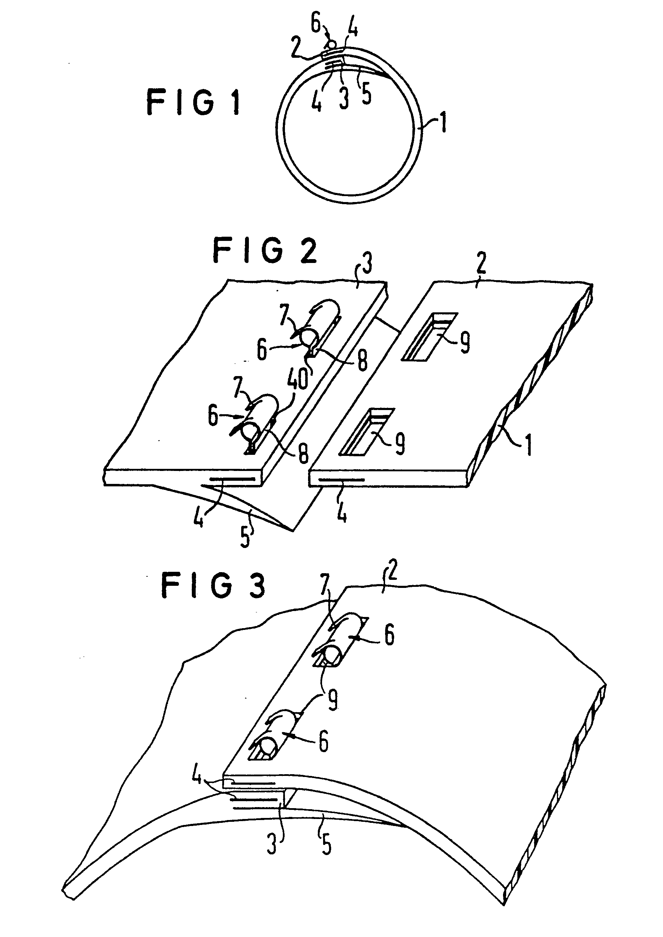

In Figur 1 ist ein längsgeteilter Schlauch 1 aus schrumpfbarem Material dargestellt, der an seinen beiden Längsrändern 2 und 3 ein Verschlusssystem mit einzelnen Hakenelementen 6 aufweist. Diese Hakenelemente 6 sind in form- und temperaturfesten Verstärkungen 4 entlang der Längsränder 2 und 3 eingebracht, durch die eine gleichmässige Verteilung der Schrumpfkräfte erfolgt, ohne dass das erweichende Schrumpfmaterial unzulässige Verformungen erleidet. Weiterhin ist hier erkennbar, dass die Längstrennung des Schlauches 1 von einem Untertritt 5 überbrückt wird. Die Abdichtung des Verschlusssystems wird mittels Einlagen oder Beschichtungen aus geeigneten Dichtungsmaterialien, zum Beispiel mit einem bei Schrumpftemperatur aktivierbaren Schmelzkleber, vorgenommen.

Die Figuren 2 und 3 zeigen nun in Einzelheiten den Verschlussbereich entlang der Längsränder 2 und 3 des Schlauches 1. Hieraus wird deutlich, dass der eine Längsrand 3 die Hakenelemente 6 trägt, während der zweite Längsrand 2 die korrespondierenden Ausschnitte 9 zum Einhängen der gegenüberliegenden Hakenelemente 6 enthält. Entlang der Verschlussbereiche der Längsränder 2 und 3 sind im schrumpfbaren Material Verstärkungen 4 eingelagert, die ein Abwandern des Schrumpfmaterials im erweichten Zustand verhindern. Die Figur 2 zeigt das Verschlusssystem im geöffneten und Figur 3 im geschlossenen Zustand, wobei hier die beiden Längsränder 2 und 3 nach gegenseitigem Ineinanderhaken übereinander zu liegen kommen. Die einzelnen Hakenelemente 6 sind aus bandförmigem Material in ihrem nach aussen abweisenden Verschlussteil etwa zylinderförmig gebogen, wobei der Durchmesser etwa der Breite der Ausschnitte 9 des zweiten Längsrandes 2 entspricht, so dass sie gerade noch hindurchgedrückt werden können. Das Einhängen des Längsrandes 2 erfolgt durch Überdrücken der Ausschnitte in die Hakenelemente 6. Dabei wird der Längsrand 2 unter die Verriegelungen 7, welche als fahnenartige Abschnitte des zylindrischen Verschlussteils tangential abweisend ausgebildet sind, gedrückt, so dass der zweite Längsrand 2 vollends über den Hakenelementen 6 eingehakt ist. Die Verriegelungen 7 stehen nun über die Ausschnitte 9 hinaus, so dass ein selbständiges Öffnen des Verschlusses vor und während des Schrumpfvorganges nicht mehr möglich ist, zumal durch die einwirkenden Schrumpfkräfte die Verriegelungen 7 und die gewählte Art der Ausbildung der Hakenelemente 6 infolge des sich spannenden Schlauches 1 noch wirksamer werden. Die Hakenelemente 6 sind über einen Steg 8, der etwa der Dicke des zweiten Längsrandes 2 entspricht, in den Verstärkungen 4 des ersten Längsrandes 3 befestigt. Aus Figur 3 wird weiterhin deutlich, dass der Untertritt 5 die Trennungslinie des Schlauches 1 überdeckt, wobei mit geeigneten Einlagen aus Dichtungsmaterial die Abdichtung vorgenommen wird.

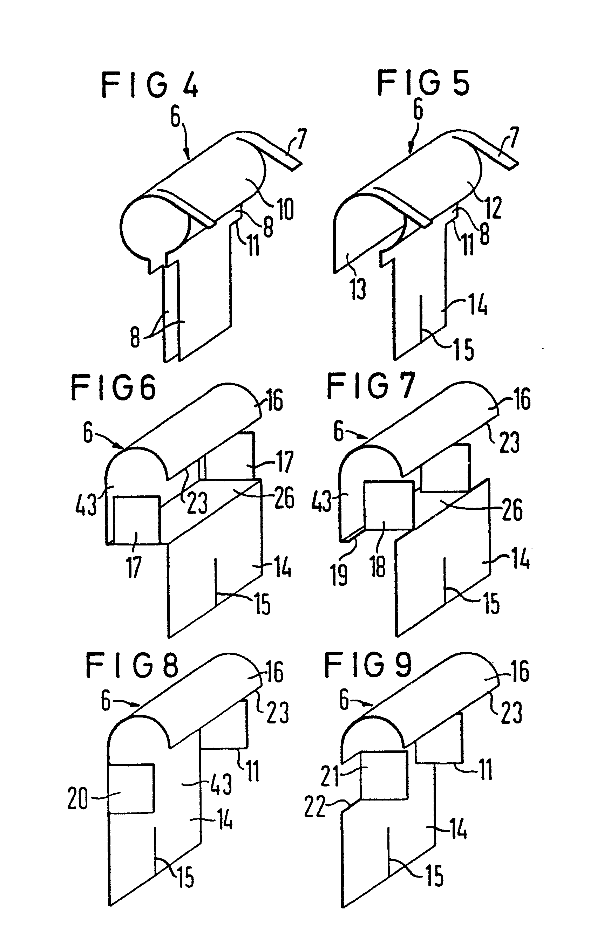

Die Figur 4 zeigt nun das in den beiden vorhergehenden Figuren bereits angedeutete, aus bandförmigem Material gebogene Hakenelement 6, welches sich aus einem eigentlichen Verschlussteil 10 und einem aus Befestigungslaschen 14 gebildeten Befestigungsteil zusammensetzt. Das Verschlussteil 10 ist zylinderförmig gebogen und bildet auf diese Weise eine Art Hinterschneidung für den später über ihn gestülpten Ausschnitt 9 des hier nicht gezeigten Längsrandes 2. Dieser zylinderförmige Teil beginnt erst oberhalb eines Steges 8, der in seiner Höhe etwa der Dicke des zweiten Längsrandes 2 entspricht, so dass der Längsrand 2 mit seinem Ausschnitt 9 an der ganzen Breite des Hakenelementes 6 anliegen kann. Die überstehenden Verriegelungen 7, die als abstehende Abschnitte des zylinderförmigen Teils ausgebildet sind, verhindern das Ausklinken der Ausschnitte 9 des zweiten Längsrandes 2. Befestigt werden diese Hakenelemente 6 mit ihren Befestigungslaschen 14, die sich jeweils an die Stege 8 anschliessen, wobei die Befestigungslaschen 14 schmäler gehalten sind als die Stege 8. So ergeben sich überstehende Kanten, welche als Gegenlager 11 bei der Befestigung dienen. Die Befestigungslaschen 14 werden durch längsverlaufende und auf die Länge der Hakenelemente 6 abgestimmte Schlitze 40 des Schlauches 1 von aussen nach innen eingesteckt und auf der Innenseite des Schlauches 1 zum Beispiel durch Umbiegen der Befestigungslaschen 14 gesichert. Die als Kanten ausgebildeten Gegenlager 11 stützen sich dabei auf der Aussenseite des Schlauches 1 ab und verhindern ein Durchschlüpfen des gesamten Hakenelementes 6. Bei dieser Ausführung sind zwei Befestigungslaschen 14 vorgesehen, die jedoch durch einen einzigen Schlitz 40 geführt werden. Diese Schlitze sind im Bereich der Verstärkungen 4 eingebracht, welche durch die längsgerichteten und bandförmig ausgebildeten Hakenelemente 6 sehr schmal gehalten werden können. Dies erhöht die Flexibilität des Verschlusssystems.

Die Figur 5 zeigt ein ähnliches Ausführungsbeispiel wie Figur 4. Doch erfolgt hier keine Zurückführung des bandförmigen Materials einer zweiten Befestigungslasche. Das Verschlussteil 12 besteht hier nur aus einer etwa halbzylindrisch gebogenen Fläche, die schliesslich tangential abweisend und auf die Schlauchoberfläche zurückgebogen in eine als Stütze 13 ausgebildete Fläche übergeht. Dies bewirkt eine Abstützung und eine Knicksicherung des Verschlussteils 12 bei Einwirkung der tangential wirkenden Schrumpfkräfte. Auch hier ist mindestens ein Rand des zylindrischen Verschlussteils 12 eingeschnitten und als Verriegelung 7 aufgebogen, um ein Ausklinken der Ausschnitte 9 des zweiten Längsrandes 2 zu verhindern. Die Befestigungslasche 14 kann mit einem Schlitz 15 versehen werden, so dass auf diese Weise auf der Innenseite des Schlauches 1 ein Auffalten nach beiden Seiten hin ermöglicht wird. Dieses Ausführungsbeispiel könnte auch so abgewandelt werden, dass die Befestigungslasche 14 und die Stütze 13 ineinander übergehen, wobei sich dann durch den Abschnitt des halbzylindrischen Verschlussteiles 12 gewissermassen eine Hinterschneidung bildet. Der Steg 8 mit den abgesetzten Kanten als Gegenlager 11 muss dann ebenfalls umgesetzt werden.

Bei den folgenden Ausführungsbeispielen in den Figuren 6 bis 19 wird jeweils das abstehende Verschlussteil des Hakenelementes als flächenförmiger Bogen ausgebildet, wobei der Bogen in seinem freien Ende zur Oberfläche des Schlauches zurückweist und mit seiner Kante so weit über der Oberfläche des Schlauches endet, dass der zweite übergestülpte Längsrand darunter einrasten kann und auf diese Weise gegen versehentliches Ausklinken gesichert ist. Dies wird durch die Wahl der Krümmung und Breite des Bogens erreicht und zwar so, dass die Kante jeweils über die darunter befindlichen Lager und Stützflächen hinwegragt, so dass sich bei tangentialem Zug der Schrumpfkräfte die Verriegelung für die Ausschnitte des zweiten Längsrandes ergibt.

In den Figuren 6 und 7 sind Hakenelemente 6 mit jeweils einem Bogen 16 dargestellt. Hier werden weiterhin als Gegenlager 26 für die Befestigungslaschen 14 abgewinkelte und auf der Oberfläche des Schlauches 1 aufsitzende Flächen verwendet. Hierbei werden die Befestigungslaschen 14, mit oder ohne Schlitz 15, senkrecht abgebogen und liegen auf der äusseren Oberfläche des Schlauches 1 im Verschlussbereich als Gegenlager 26 auf. Diese Gegenlager 26 sind schliesslich weiterhin radial abweisend als Flächen 43 abgewinkelt und gehen schliesslich in einen flächenförmigen Bogen 16 über. Das Ende des Bogens 16 bildet mit seiner Kante 23 für die Ausschnitte 9 des zweiten Längsrandes 2 eine Verriegelung nach der bereits geschilderten Art, da die unter ihm aufgefalteten Stützflächen 17 nicht so breit ausgebildet sind und gegenüber der Kante 23 zurückstehen. Somit steht die Kante 23 über und bildet die gewünschte Verriegelung. Im Beispiel der Figur 6 sind diese Stützflächen 17 als Ansätze des Gegenlagers 26 ausgebildet und nach aussen abweisend aufgefaltet. Bei dem Ausführungsbeispiel nach Figur 7 sind die Stützflächen 18 direkt aus dem Gegenlager 26 ausgeschnitten und aufgefaltet, wobei ein Restrand 19 für die erforderliche Festigkeit und Versteifung des Hakenelementes von Vorteil ist. Ansonsten gleichen sich die Verhältnisse in beiden Fällen.

In den Figuren 8 und 9 sind Ausführungsbeispiele gezeigt, bei denen die Gegenlager 11 für die Befestigungslaschen 14 aus den Stützflächen 20 bzw. 21 gebildet werden. Ausserdem geht hier jeweils die Befestigungslasche 14 in eine radial nach aussen abweisende Fläche 43 des Verschlussteils mit dem anschliessenden Bogen 16 über. Zur Versteifung des Hakenelementes 6 dienen die Stützflächen 20 bzw. 21, welche an die Fläche 43 angesetzt bzw. aus dieser herausgeschnitten und abgewinkelt sind. Die übrigen Verhältnisse gleichen den vorher beschriebenen.

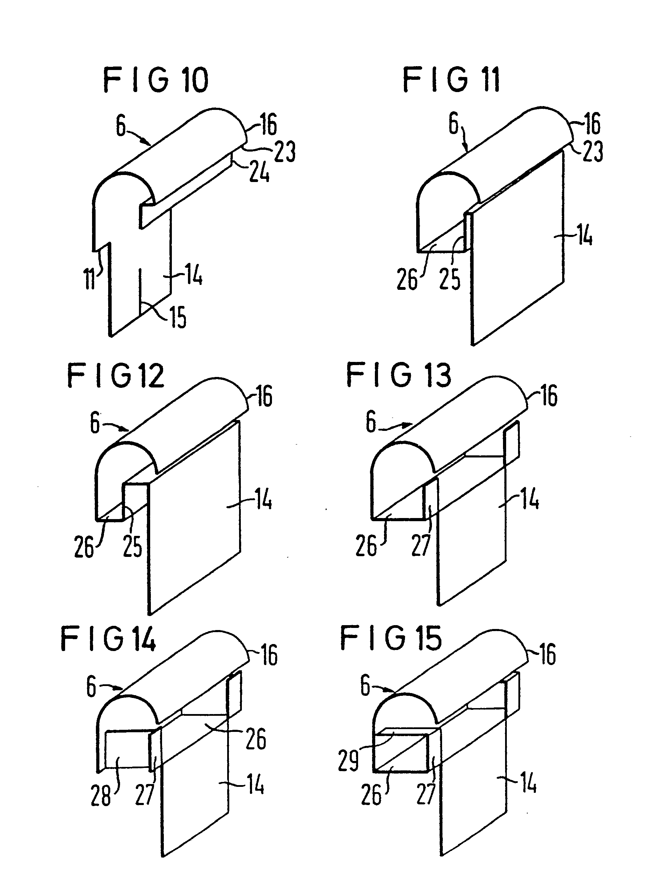

Die Figur 10 zeigt wiederum ein Ausführungsbeispiel mit einem flächenförmigen Bogen 16 im Verschlussteil und mit Befestigungslaschen 14, welche gegenüber der abweisenden Fläche des Verschlussteils abgesetzt sind, so dass die Gegenlager 11 als überstehende Kanten herausgebildet sind. Die Kante 23 als Abschluss des Bogens 16 ist diesmal nicht abgeschnitten, sondern als Rückfaltung zur Verriegelung ausgebildet, wobei zusätzlich eine Anschlagfläche 24 zur Oberfläche des Schlauches 1 abgewinkelt ist. Diese Anschlagfläche 24 verhindert, dass die Ausschnitte 9 des zweiten Längsrandes 2 bis zur Gegenseite des Hakenelementes 6 infolge der Einwirkung der Schrumpfkräfte gezogen werden. Auf diese Weise ist eine feste und gleichmässige Anlage am Hakenelement 6 gewährleistet.

Die Figur 11 gibt ein Ausführungsbeispiel einer Anschlagfläche wieder, welche durch die hochgezogene Befestigungslasche 14 gebildet wird. Hierauf erfolgt die Rückfaltung der auf diese Weise versteiften Anschlagfläche 25 zur Oberfläche des Schlauches 1 zurück. Diese Anschlagfläche 25 wird zu einem auf der Oberfläche des Schlauches aufliegenden flächenhaften Gegenlager 26 abgewinkelt und weist dann eine als eigentliches Verschlussteil mit dem bereits beschriebenen Bogen 16 radial nach aussen ab. Die freie Kante 23 dieses Bogens 16 bildet wieder die Verriegelung für die Ausschnitte 9, da der Bogen 16 weiter gezogen ist als die senkrecht abweisende Anschlagfläche 25.

In Figur 12 ist ein Ausführungsbeispiel gezeigt, das dem von Figur 11 sehr ähnlich ist. Der Unterschied liegt in der Breite des Gegenlagers 26, wobei hier bezüglich der Steifigkeit eine Variante gegeben ist, welche durch die Flächenaufteilung bestimmt wird.

Die Figur 13 erläutert ein Ausführungsbeispiel mit zwei Anschlagflächen 27, die senkrecht abweisend von der Fläche des Gegenlagers 26 nach aussen abstehen. Die Befestigungslasche 14 ist direkt vom Gegenlager 26 abgewinkelt und liegt zwischen den beiden Anschlagflächen 27, jedoch in entgegengesetzter Richtung.

Die Figur 14 zeigt eine Weiterbildung des Beispiels nach der vorigen Figur bezüglich der Festigkeit und Steifigkeit, insbesondere der Anschlagflächen 27. Hier werden zwischen den abweisenden Flächen des Verschlusteiles mit seinem Bogen 16 und den Anschlagflächen 27 jeweils zwei Stützflächen 28 aufgefaltet, durch die verhindert wird, dass die Anschlagflächen 27 bei Einwirkung der Schrumpfkräfte umgebogen werden.

Auch die Figur 15 zeigt eine Variante des in Figur 13 abgebildeten Hakenelementes 6. Hier sind die Anschlagflächen 27 selbst nochmals abgewinkelt und bilden Stützflächen 29 mit denen eine Abstützung auf die abweisende Gegenfläche erfolgt. Die anderen Verhältnisse sind wiederum gleich.

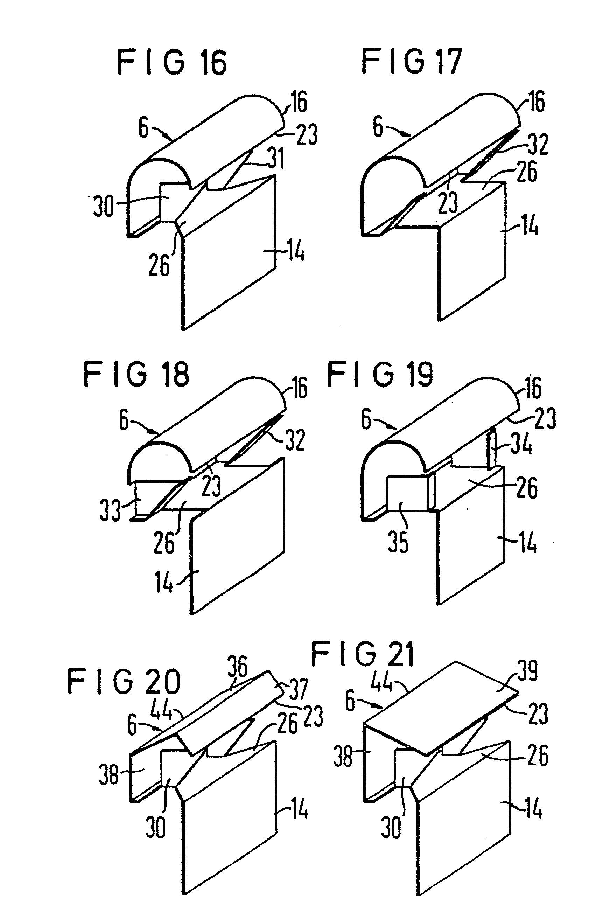

Das Ausführungsbeispiel nach Figur 16 entspricht in etwa dem Hakenelement 6 aus der Figur 7; der Unterschied liegt lediglich in der Ausbildung der Stützflächen 30. Es handelt sich wie dort um ein Hakenelement 6 mit flächenförmigem Bogen 16 im Verschlussteil, wobei die Kanten 31 der darunter liegenden und quergestellten Stützflächen 30 auf der Einhakseite, das heisst auf der Seite der überstehenden Kante 23 des Bogens 16, von aussen nach innen zur Fläche des Gegenlagers 26 hin unter spitzen Winkeln verlaufen. Auf diese Weise wird eine Art Hinterschneidung gebildet, so dass sich der zweite Längsrand 2 bei Einwirkung der Schrumpfkräfte immer mehr unter die schräg verlaufenden Stützflächen 30 hineinzieht und verhakt. Durch die Schrägstellung wird weiterhin gewährleistet, dass sich der zweite Längsrand 2 automatisch möglichst eng an die Oberfläche des ersten Längsrandes 3 heranzieht.

Die Figur 17 zeigt eine Variante nach Figur 16, bei der auf die Stützflächen für das Verschlussteil verzichtet ist, bei der jedoch schräg gestellte Anschlagflächen 32 für die Ausschnitte des zweiten Längsrandes 2 aus der Fläche des Gegenlagers 26 aufgefaltet sind. Auch hier wird der Effekt erzielt, dass sich infolge der schräg gestellten Anschlagflächen 32 der zweite Längsrand 2 bei Einwirkung der Schrumpfkräfte möglichst eng an die Oberfläche des ersten Längsrandes 3 anschmiegt.

In der Figur 18 ist das Beispiel nach Figur 17 weiter modifiziert. Hier sind die schräggestellten Anschlagflächen 32 Stützflächen 33 aus der radial nach aussen abweisenden Fläche des Verschlussteils ausgeschnitten und quergestellt, so dass die Festigkeit und die Steifigkeit der Anschlagflächen 32 erhöht wird.

Die Figur 19 zeigt ein nach Figur 7 abgewandeltes Ausführungsbeispiel. Hier sind an den quergestellten Stützflächen 35 zusätzlich Anschlagflächen 34 angefaltet, welche in Längsrichtung des Hakenelementes 6 weisen. Hierdurch wird ebenfalls die Steifigkeit des gesamten Hakenelementes 6 erhöht, wobei der zweite Längsrand 2 im Bereich seiner Ausschnitte 9 an den Anschlagflächen 34 und nicht an Kanten angepresst wird. Der Bogen 16 ist bei all diesen Beispielen mit seiner Kante 23 überstehend, so dass er für die Ausschnitte 9 des Längsrandes 2 eine Verriegelung bildet, die ein unbeabsichtigtes Ausklinken des Verschlusses verhindert.

In Figur 20 wird ein Hakenelement 6 erläutert, bei dem der Bogen 16 der bisherigen Ausführungsbeispiele durch kantig gefaltete Teilflächen 36 und 37 ersetzt wird. Die Befestigungslasche 14, sowie das auf der Oberfläche des Schlauches aufliegende Gegenlager 26 bleiben erhalten. Ebenso sind Stützflächen 30 angeordnet, welche in diesem Fall den schräg verlaufenden Stützflächen 30 aus der Figur 16 entsprechen. Bei der Ausbildung des Verschlussteiles wird die radial nach aussen abweisende Fläche 38 über eine Kante 44 von der Kante des Längsrandes schräg abweisend abgewinkelt, so dass eine dem Bogen 16 entsprechende Fläche 36 entsteht. Diese Fläche 36 setzt sich über eine weitere Knicklinie in einer zur Oberfläche des Schlauches 1 zurückweisende Fläche 37 fort, welche mit ihrer Kante 23, ebenso wie die überstehende Kante 23 des Bogens 16, die Funktion einer Verriegelung für den übergestülpten zweiten Längsrand 2 erfüllt. Die anderen Verhältnisse entsprechen den bisherigen Ausführungen, so dass sich eine Wiederholung erübrigt.

Schliesslich ist in Figur 21 noch ein Ausführungsbeispiel dargestellt, das in vereinfachter Form dem Hakenelement 6 der Figur 20 entspricht. Hier ist die doppelt abgewinkelte Fläche 36–37, die dem bisher besprochenen Bogen 16 ähnelt, in eine einfache, nicht gefaltete Fläche 39 umgebildet, wobei diese Fläche 39 ebenfalls über eine Knicklinie 44 von der radial abweisenden Fläche 38 des Hakenelementes 6 abgewinkelt ist und insgesamt eine Neigung zurück zur Oberfläche des Schlauches 1 aufweist. Somit ist auf diese Art auch hier eine Verhakung bzw. Verriegelung für den zweiten Längsrand gebildet. Die Verhältnisse bezüglich der Stützflächen 30, des Gegenlagers 26 und der Befestigungslasche 14 sind ebenfalls bereits behandelt.

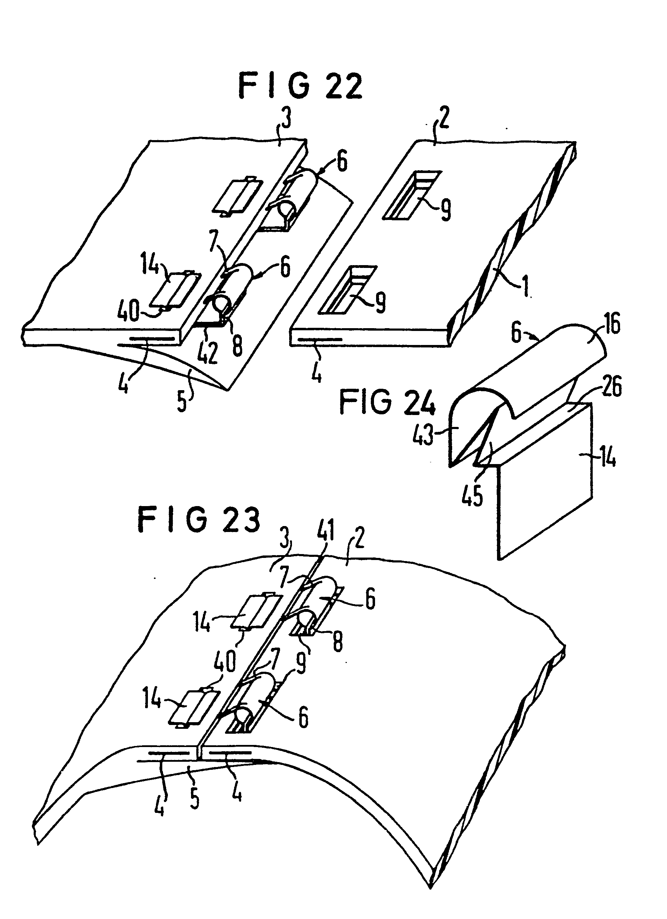

In den beiden nachfolgenden Figuren 22 und 23 wird ein Verschlusssystem mit Hakenelementen 6 gemäss der Erfindung dargestellt, bei dem die beiden Längsränder 2 und 3 des Schlauches 1 nicht übereinanderliegend ineinander verhakt werden, sondern nebeneinander angeordnet werden können. Dies hat den Vorteil, dass keine Materialüberdeckungen im Verschlussbereich vorhanden sind, durch die unter Umständen Schwierigkeiten bei der Wärmezufuhr in die inneren Bereiche auftreten könnten. Besonders bei Verwendung eines Schmelzklebers, der auf dem den Schlitz überdeckenden Untertritt 5 angeordnet wird, könnte die zum Aktivieren benötigte Temperatur eventuell ungleichmässig und unzureichend erreicht werden. Diese konstruktive Massnahme erfordert jedoch auch eine Umgestaltung der Verschlusselemente, da nun die Befestigung in dem einen Längsrand 3 mit Hilfe der Befestigungslaschen 14 und das Einhaken des Hakenelementes 6 in einen Ausschnitt 9 des zweiten Längsrandes 2 nebeneinander liegend erfolgen muss. Derartige Hakenelemente 6, die jedoch im wesentlichen den vorher aufgezeigten Hakenelementen 6 entsprechen, weisen nun zwischen den Befestigungsteilen und den Verschlussteilen querliegende Überbrückungen 42 auf, die tangential zwischen dem einen Längsrand 3 und dem Untertritt 5 verlaufen. Diese Überbrückungen 42 sind so breit, dass der zweite Längsrand 2 nach dem Einhaken der Verschlussteile in die entsprechenden Ausschnitte 9 mit seiner Kante parallel verlaufend entlang der Kante des ersten Längsrandes 2 zu liegen kommt, wobei der Längsspalt 41 möglichst gering gehalten wird. Dieser Endzustand ist in Figur 23 dargestellt, während in Figur 22 der Schlauch 1 im geöffneten Zustand die Einzelheiten des Verschlusssystems besser erkennen lässt. Bei diesem Beispiel sind Hakenelemente 6 nach Figur 4 gewählt, doch sind auch alle anderen Varianten mit Einführung der Überbrückungen verwendbar. Das Wesentliche hieran ist nun, dass die Hakenelemente 6 den Längsschlitz 41 des Schlauches 1 überstrecken und dies erfolgt mit stegartigen Überbrückungen 42 zwischen dem Befestigungsteil und dem eigentlichen Verschlussteil. Hier sind die Befestigungslaschen 14 von innen nach aussen durch die im Bereich der Verstärkung 4 angeordneten Schlitze 40 eingeführt und auf der Aussenseite des Schlauches 1 durch Umbiegen verankert. Auf der Innenseite des Schlauches 1, also zwischen dem Längsrand 3 und dem Untertritt 5 sind die Befestigungslaschen 14 zur Trennungslinie 41 hin umgebogen und erstrecken sich bis zu der Position, in der nach dem Einhaken des zweiten Längsrandes 2 die Ausschnitte 9 zu liegen kommen. Hier sind die Überbrückungen 42 wieder nach aussen hin abgewinkelt und gehen in den eigentlichen Verschlussteil des Hakenelementes 6 über. Hier sind, wie bereits erwähnt, Hakenelemente 6 mit zylindrischer Ausgestaltung und abstehenden Verriegelungen 7 dargestellt, so dass die Erläuterung der Funktion nicht wiederholt werden muss. Nach dem Einhaken des zweiten Längsrandes 2 ergeben sich die Verhältnisse nach Figur 23. Hier lässt sich deutlich erkennen, dass die Verriegelungen 7 ein unbeabsichtigtes Ausklinken des Verschlusses verhindern können, zumal die tangential wirkenden Schrumpfkräfte stärkeres Verhaken bewirken. Abschliessend sei noch erwähnt, dass die Hakenelemente 6 bei einer derartigen Ausführung auch in umgekehrter Form eingesetzt werden können, das heisst, die Verschlussteile werden dann von aussen in die darunter liegenden Ausschnitte 9 des zweiten Längsrandes 2 gedrückt, so dass von aussen nur die Überbrückungen 42 sichtbar sind. Hier müssen dann eventuell entsprechende Aussparungen im Untertritt 5 für die nach innen weisenden Hakenelemente 6 vorgesehen werden.

Es wird noch darauf verwiesen, dass bei den Ausführungsbeispielen der Hakenelemente 6 auf eine Darstellung im montierten Zustand verzichtet wurde, da die jeweiligen Verhältnisse dem in den Figuren 1, 2 und 3 gezeigten Prinzip entsprechen. Ein Bezug auf Einzelheiten des Schlauches sind in diesem Zusammenhang zu sehen.

In Figur 24 wird ein weiteres Hakenelement 6 gezeigt, bei dem alle Faltungen des Materials in der gleichen Richtung erfolgen. Dies vereinfacht die Herstellung des Verschlusselementes. So wird hier die Befestigungslasche 14 senkrecht zur Fläche als Gegenlager 26 abgewinkelt. Das Gegenlager 26 erhält nun eine Auffaltung, die unter spitzem Winkel zum Gegenlager 26 geneigt ist und als Anschlagfläche 45 für die Ausschnitte 9 des zweiten Längsrandes dient. Eine Rückfaltung zur Oberfläche des Schlauches erhöht die Festigkeit der Anschlagfläche 45. Von hier aus erfolgt die Faltung zur senkrecht vom Schlauch 1 abstehenden Gegenfläche 43, welche in den mehrfach bereits beschriebenen Bogen 16 übergeht. Die Schrägstellung der Anschlagfläche 45 bewirkt wiederum eine gegenseitige feste Anlage der beiden Längsränder 2 und 3.

**Patentansprüche**

1. Längsgeteilter Schlauch (1) aus schrumpfbarem Material, der entlang seiner beiden Längsränder (2, 3) Verstärkungseinlagen (4) und mehrere aus Haken- (6) und Rastelementen (9) bestehende Verschlusselemente aufweist, wobei die am ersten Längsrand (3) angeordneten Hakenelemente (6) in die als Ausschnitte (9) ausgebildeten Rastelemente des zweiten Längsrandes (2) eingreifen, dadurch gekennzeichnet, dass die Hakenelemente (6) Befestigungslaschen (14) mit Gegenlagern (11, 26) aufweisen, die jeweils bis zum Gegenlager (11, 26) in axial verlaufende Schlitze (40) im Bereich der Verstärkungseinlage (4) eingebracht und verankert sind und dass jedes Hakenelement (6) einen vom ersten Längsrand (3) abstehenden Verschlussteil (10, 12, 16, 36–37, 38–39) mit jeweils mindestens einer Verriegelung (7, 23, 37, 39) für den mit seinen Ausschnitten (9) übergesteckten zweiten Längsrand (2) aufweist.

2. Längsgeteilter Schlauch nach Anspruch 1, dadurch gekennzeichnet, dass die Hakenelemente (6) aus bandförmigem Material gefaltet sind.

3. Längsgeteilter Schlauch nach Anspruch 1 oder 2, dadurch gekennzeichnet, das die Hakenelemente (6) im Verschlussteil (10, 12, 16, 36–37, 38–39) federnd ausgebildet sind.

4. Längsgeteilter Schlauch nach einem der vorhergehenden Ansprüche, dadurch gekennzeichnet, dass die Gegenlager der Befestigungslaschen (14) als überstehende Kanten (11) ausgebildet sind, und zwar so, dass die Befestigungslasche (14) schmäler ist als das anschliessende Verschlussteil (10, 12, 16).

5. Längsgeteilter Schlauch nach einem der Ansprüche 1 bis 3, dadurch gekennzeichnet, dass die Gegenlager (26) der Befestigungslaschen (14) als senkrecht abgewinkelte und auf dem Schlauch (1) aufliegende Flächen ausgebildet sind.

6. Längsgeteilter Schlauch nach einem der vorhergehenden Ansprüche, dadurch gekennzeichnet, dass die Befestigungslasche (14) durch einen Längsschlitz (15) geteilt ist.

7. Längsgeteilter Schlauch nach einem der vorhergehenden Ansprüche, dadurch gekennzeichnet, dass die Hakenelemente (6) mit ihren Befestigungslaschen (14) in die Schlitze (40) des Verschlussbereiches entlang der Längsränder (2, 3) radial von aussen nach innen eingeführt sind.

8. Längsgeteilter Schlauch nach einem der Ansprüche 1 bis 6, dadurch gekennzeichnet, dass die Hakenelemente (6) mit ihren Befestigungslaschen (14) in die Schlitze (40) des Verschlussbereiches entlang der Längsränder (2, 3) radial von innen nach aussen eingeführt sind, dass die Befestigungslaschen (14) auf der Aussenseite des Längsrandes (3) verankert sind, dass die Befestigungslaschen (14) mit zwischen dem Längsrand (3) und einem Untertritt (5) tangential verlaufenden Überbrückungen (42) versehen sind, welche die Trennungslinie (41) des Schlauches (1) überbrücken, dass die Überbrückungen (42) an ihren Enden radial nach aussen gerichtete Stege (8) aufweisen, an denen die Verschlussteile (10, 12, 16, 36–37, 38–39) der Hakenelemente (6) angeordnet sind.

9. Längsgeteilter Schlauch nach einem der vorhergehenden Ansprüche, dadurch gekennzeichnet, dass das Verschlussteil (10) des Hakenelementes (6) aus bandförmigem Material zylinderförmig ausgebildet ist und dass mindestens eine Verriegelung (7) durch einen etwa tangential aufgebogenen Zylinderwandabschnitt gebildet ist, wobei die Aufbiegung so weit erfolgt, dass der übergesteckte zweite Längsrand (2) unterhalb der Verriegelung (7) eingerastet ist und dass das zweite Ende des bandförmigen Materials als zweite Befestigungslasche (14) ebenfalls zur Verankerung durch den Schlitz (40) des Schlauches (2–3) eingezogen ist, wobei als Gegenlager (11) abgesetzte Kanten des Verschlussteils (10) dienen.

10. Längsgeteilter Schlauch nach einem der Ansprüche 1 bis 8, dadurch gekennzeichnet, dass das Verschlussteil (12) des Hakenelementes (6) aus bandförmigem Material halbzylindrisch ausgebildet ist, dass auf der halbzylindrischen Seite mindestens eine etwa tangential abstehende Verriegelung (7) eingeschnitten und aufgebogen ist, wobei die Aufbiegung so weit erfolgt ist, dass der zweite Längsrand (2) unter der Verriegelung (7) einrastet und dass das Ende des halbzylindrisch ausgebildeten Verschlussteils (12) tangential bis zur Höhe des Gegenlagers (11) als Stütze (13) auf die Oberfläche des Schlauches (3) zurückgebogen ist.

11. Längsgeteilter Schlauch nach einem der Ansprüche 1 bis 8, dadurch gekennzeichnet, dass das abstehende Verschlussteil des Hakenelementes (6) als flächenförmiger Bogen (16) ausgebildet ist, wobei der Bogen (16) mit seiner zum Schlauch zurückgebogenen Kante (23) in einem Abstand vom Schlauch (1) endet, der etwa der Dicke des zweiten Längsrandes (2) entspricht und dass die Krümmung und Breite des Bogens (16) so gewählt sind, dass die Kante (23) des Bogens (16) über das Gegenlager hinwegragt und für die Ausschnitte (9) des zweiten Längsrandes (2) jeweils eine überstehende Verriegelung ergibt.

12. Längsgeteilter Schlauch nach einem der vorhergehenden Ansprüche, dadurch gekennzeichnet, dass Stützflächen (17, 128, 20, 21, 27–28, 27–29, 30, 32, 33, 34–35) für den Bogen (16) des Verschlussteiles des Hakenelementes (6) nach aussen abweisend aufgefaltet sind.

13. Längsgeteilter Schlauch nach Anspruch 11 oder 12, dadurch gekennzeichnet, dass die Befestigungslasche (14) als Gegenlager (26) eine rechtwinklig abgebogene Fläche aufweist, welche auf der Aussenseite des Verschlussbereiches aufliegt, dass der Verschlussteil des Hakenelementes (6) zunächst als radial nach aussen abweisende Fläche (43) an das Gegenlager (26) anschliesst und dass das Ende dieser Fläche (43) in den etwa halbkreisförmigen Bogen (16) übergeht.

14. Längsgeteilter Schlauch nach einem der vorhergehenden Ansprüche, dadurch gekennzeichnet, dass die Stützflächen (18) aus dem als Fläche ausgebildeten Gegenlager (26) ausgeschnitten und radial nach aussen abweisend aufgefaltet sind.

15. Längsgeteilter Schlauch nach einem der vorhergehenden Ansprüche, dadurch gekennzeichnet, dass an der radial abweisenden Fläche (43) des Hakenelementes (6) Ansätze in Form von Stützflächen (20) angeordnet sind, welche mit den schlauchnahen Kanten (11) die Gegenlager bilden.

16. Längsgeteilter Schlauch nach einem der vorhergehenden Ansprüche, dadurch gekennzeichnet, dass die Ansätze der Stützflächen (21) aus der Fläche (43) ausgeschnitten und quer zur Fläche (43) gefaltet sind.

17. Längsgeteilter Schlauch nach einem der Ansprüche 11 bis 16, dadurch gekennzeichnet, dass die Kante (23) des Bogens (16) als Rückfaltung (24) ausgebildet ist.

18. Längsgeteilter Schlauch nach einem der Ansprüche 11 bis 17, dadurch gekennzeichnet, dass die Befestigungslasche (14) nach Durchtritt des Schlitzes im Längsrand (3) bis zur Höhe der Kante (23) des Bogens (16) hochgezogen ist, dass die hochgezogene Befestigungslasche (14) als Versteifungsfläche (25) bis zur Oberfläche des Längsrandes (3) zurückgefaltet ist, wo sie zum Gegenlager (26) umgefaltet ist, dass das Gegenlager (26) radial abweisend in den Verschlussteil des Hakenelementes (6) mit dem Bogen (16) übergeht, wobei die Kante (23) über die hochgezogene Befestigungslasche (14) hinwegreicht und die Verriegelung bildet.

19. Längsgeteilter Schlauch nach einem der Ansprüche 1 bis 8 oder 12, dadurch gekennzeichnet, dass das abstehende Verschlussteil des Hakenelementes (6) als abgewinkelte Fläche (36–37, 39) ausgebildet ist, wobei die zum Schlauch zurückgefaltete Fläche (37, 39) mit ihrer Kante (23) in einem Abstand vom Schlauch (1) endet, der etwa der Dicke des zweiten Längsrandes (2) entspricht und dass die Breite der abgewinkelten Fläche (37, 39) so gewählt ist, dass ihre Kante (23) für die Ausschnitte (9) des zweiten Längsrandes (2) eine überstehende Verriegelung bildet.

20. Längsgeteilter Schlauch nach einem der vorhergehenden Ansprüche, dadurch gekennzeichnet, dass die Hakenelemente (6) aus korrosionsfestem Material bestehen.

21. Längsgeteilter Schlauch nach einem der vorhergehenden Ansprüche, dadurch gekennzeichnet, dass einer der Längsränder (2, 3) auf seiner Innenseite einen den Längsschlitz (41) überdeckenden Untertritt (5) aufweist.

22. Längsgeteilter Schlauch nach einem der vorhergehenden Ansprüche, dadurch gekennzeichnet, dass die Befestigungslaschen (14) durch Umbiegen auf der Gegenseite verankert sind.

23. Längsgeteilter Schlauch nach einem der vorhergehenden Ansprüche, dadurch gekennzeichnet, dass die Befestigungslaschen (14) durch Kleber gesichert sind.

24. Längsgeteilter Schlauch nach einem der vorhergehenden Ansprüche, dadurch gekennzeichnet, dass die Verstärkungseinlagen (4) im Verschlussbereich aus eingelagerten Blechen bestehen.

25. Längsgeteilter Schlauch nach einem der Ansprüche 1 bis 23, dadurch gekennzeichnet, dass die Verstärkungseinlagen (4) im Verschlussbereich aus formfesten Geweben bestehen.

26. Längsgeteilter Schlauch nach einem der vorhergehenden Ansprüche, dadurch gekennzeichnet, dass an den Hakenelementen (6) Anschlagflächen (24, 25, 27, 32, 34, 45) zum Anschlag der Ausschnitte (9) des zweiten Längsrandes (2) angeordnet sind.

## Claims

1. A split hose (1) of a shrinkable material which along its two longitudinal edges (2, 3) has reinforcing inserts (4) and a plurality of locking elements which consist of hook elements (6) and catch elements (9), the hook elements (6) which are arranged on the first longitudinal edge (3) engaging into the catch elements of the second longitudinal edge (2) which are designed as openings (9), characterised in that the hook elements (6) have fixing flaps (14) which have abutments (11, 26) and which are in each case inserted up to the abutment (11, 26) into axially extending slots (40) in the region of the reinforcing inserts (4) and anchored; and that each hook element (6) has a locking part (10, 12, 16, 36–37, 38–39) which protrudes from the first longitudinal edge (3) and has at least one locking member (7, 23, 37, 39) for the second longitudinal edge (2) with its superimposed openings (9).

2. A split hose as claimed in Claim 1, characterised in that the hook elements (6) are folded from strip-shaped material.

3. A split hose as claimed in Claim 1 or Claim 2, characterised in that the hook elements (6) are resiliently formed at the locking part (10, 12, 16, 36–37, 38–39).

4. A split hose as claimed in one of the preceding Claims, characterised in that the abutments of the fixing flaps (14) are designed as protruding edges (11) and in such manner that the fixing flap (14) is narrower than the succeeding locking part (10, 12, 16).

5. A split hose as claimed in one of Claims 1 to 3, characterised in that the abutments (26) of the fixing flaps (14) are formed as vertically bent surfaces which rest on the hose (1).

6. A split hose as claimed in one of the preceding Claims, characterised in that the fixing flaps (14) are divided by a longitudinal slot (15).

7. A split hose as claimed in one of the preceding Claims, characterised in that the hook elements (6) have their fixing flaps (14) inserted into the slots (40) of the locking region along the longitudinal edges (2, 3) in radial fashion from the outside to the inside.

8. A split hose as claimed in one of Claims 1 to 6, characterised in that the hook elements (6) have their fixing flaps (14) inserted into the slots (40) of the locking region along the longitudinal edges (2, 3) in radial fashion from the inside to the outside; that the fixing flaps (14) are fastened on the outside of the longitudinal edge (2); that the fixing flaps (14) are provided with bridges (42) which extend tangentially between the longitudinal edge (3) and a lower tread (5) and which bridge the line of separation (41) of the hose (1); that at their ends, the bridges (42) have cross-pieces (8) which point radially outwardly and on which the locking parts (10, 12, 16, 36–37, 38–39) of the hook elements (6) are arranged.

9. A split hose as claimed in one of the preceding Claims, characterised in that the locking part (10) of the hook element (6) consists of strip-shaped material and is cylindrical and that at least one locking member (7) is formed by a cylinder wall section which is bent up approximately in tangential fashion, the section being bent up to such an extent that the superimposed second longitudinal edge (2) engages below the locking member (7); and that the second end of the strip-shaped material as a second fixing flap (14) is also inserted through the slot (40) of the hose (2–3) for fastening purposes, offset edges of the locking part (10) serving as abutments (11).

10. A split hose as claimed in one of Claims 1 to 8, characterised in that the locking part (12) of the hook element (6) consists of strip-shaped material and is semi-cylindrical; that on the semi-cylindrical side at least one locking member (7), which extends approximately in tangential fashion, is notched and bent up, said member being bent up to such an extent that the second longitudinal edge (2) engages below the locking member (7); and that the end of the semi-cylindrical locking part (12) is bent backwards in tangential fashion to the level of the abutment (11), as a support (13) on the surface of the hose (3).

11. A split hose as claimed in one of Claims 1 to 8, characterised in that the protruding locking part of the hook element (6) is formed as an arched area (16), where the arch (16) terminates at a distance from the hose (1) at its edge (23) which is backwardly bent with respect to the hose, which arch corresponds approximately to the thickness of the second longitudinal edge (2); and that the curvature and width of the arch (16) are so selected that the edge (23) of the arch (16) protrudes beyond the abutment and a protruding locking member is in each case formed for the openings (9) of the second longitudinal edge (2).

12. A split hose as claimed in one of the preceding Claims, characterised in that supporting surfaces (17, 18, 20, 21, 27–28, 27–29, 30, 32, 33, 34–35) for the arch (16) of the locking part of the hook element (6) are folded out so as to point outwardly.

13. A split hose as claimed in Claim 11 or Claim 12, characterised in that the fixing flap (14) has a rectangularly bent surface as an abutment (26), which rests on the outside of the locking region; that the locking part of the hook element (6) first follows the abutment (26) as a surface (43) which points radially outwards; and that the end of the surface (43) merges into the approximately semicircular arch (16).

14. A split hose as claimed in one of the preceding Claims, characterised in that the supporting surfaces (18) are cut out from the abutment (26) which is formed as a surface, and folded out so as to point radially outwards.

15. A split hose as claimed in one of the preceding Claims, characterised in that projections in the form of supporting surfaces (20), which together with the edges (11) close to the hose, form the abutments, are arranged on the surface (43) of the hook element (6) which points radially outwards.

16. A split hose as claimed in one of the preceding Claims, characterised in that the projections of the supporting surfaces (21) are cut out from the surface (43) and folded transversely to the surface (43).

17. A split hose as claimed in one of Claims 11 to 16, characterised in that the edge (23) of the arch (16) is in the form of a back-fold (24).

18. A split hose as claimed in one of Claims 11 to 17, characterised in that, after having passed through the slot in the longitudinal edge (3), the fixing flap (14) is raised to the level of the edge (23) of the arch (16); that the raised fixing flap (14) is folded back to the surface of the longitudinal edge (3) as a stiffening surface (25), where it is folded over to the abutment (26); that the abutment (26) merges into the locking part of the hook element (6) through the arch (16) so as to point radially outwards, the edge (23) extending beyond the raised fixing flap (14) and the locking member.

19. A split hose as claimed in one of Claims 1 to 8, or 12, characterised in that the protruding locking part of the hook element (6) is formed as a bent surface (36–37, 39), where the surface (37, 39) which is folded back to the hose, ends at a distance from the hose (1) by virtue of its edge (23), which corresponds approximately to the thickness of the second longitudinal edge (2); and that the width of the bent surface (37, 39) is so selected that its edge (23) forms a projecting locking member for the openings (9) of the second longitudinal edge (2).

20. A split hose as claimed in one of the preceding Claims, characterised in that the hook elements (6) are made of a corrosion-resistant material.

21. A split hose as claimed in one of the preceding Claims, characterised in that, on the inside, one of the longitudinal edges (2, 3) has a lower step (5) which covers the longitudinal slit (41).

22. A split hose as claimed in one of the preceding Claims, characterised in that the fixing flaps (14) are anchored on the opposite side by bending.

23. A split hose as claimed in one of the preceding Claims, characterised in that the fixing flaps (14) are secured by adhesives.

24. A split hose as claimed in one of the preceding Claims, characterised in that the reinforcing inserts (4) consist of metal sheets incorporated in the locking region.

25. A split hose as claimed in one of Claims 1 to 23, characterised in that the reinforcing inserts (4) are made of non-deformable webs in the locking region.

26. A split hose as claimed in one of the preceding Claims, characterised in that impact surfaces (24, 25, 27, 32, 34, 45) for contacting the openings (9) of the second longitudinal edge (2) are arranged on the hook elements (6).

**Revendications**

1. Tuyau (1) fendu longitudinalement, constitué en un matériau rétractable et qui comporte, le long de ses deux bords longitudinaux (2, 3), des inserts de renforcement (15) et plusieurs éléments de fermeture constitués par des éléments en forme de crochets (6) et par des éléments d'encliquetage (9), les éléments en forme de crochets (6) situés sur le premier bord longitudinal (3) s'engageant dans les éléments d'encliquetage, réalisés sous la forme de découpes (9), du second bord longitudinal (2), caractérisé par le fait que les éléments en forme de crochets (9) comportent des languettes de fixation (14) qui sont munies de butées (11, 26), et qui sont insérées et sont accrochées respectivement jusqu'à la butée (11, 26), dans des fentes axiales (40) au voisinage de l'insert de renforcement (4) et que chaque élément en forme de crochet (6) comporte un organe de fermeture (10, 12, 16, 36–37, 38–39) qui fait saillie sur le premier bord longitudinal (3) et qui comporte au moins un organe de verrouillage (7, 23, 37, 39) pour le second bord longitudinal (2) enfiché au moyen de ses découpes (9) par-dessus ces organes de verrouillage.

2. Tuyau fendu longitudinalement suivant la revendication 1, caractérisé par le fait que les éléments en forme de crochets (6) sont formés par pliage à partir d'un matériau en forme de bande.

3. Tuyau fendu longitudinalement suivant la revendication 1 ou 2, caractérisé par le fait que les éléments en forme de crochets (6) sont réalisés de manière à exercer une action élastique dans l'organe de fermeture (10, 12, 16, 36–37, 38–39).

4. Tuyau fendu longitudinalement suivant l'une des revendications précédentes, caractérisé par le fait que les butées des languettes de fixation (14) sont réalisées sous la forme de rebords saillants (11) et ce de telle sorte que la languette de fixation (14) est plus étroite que l'organe de fermeture (10, 12, 16) auquel elle se raccorde.

5. Tuyau fendu longitudinalement suivant l'une des revendications 1 à 3, caractérisé par le fait que les butées (26) des languettes de fixation (14) sont réalisées sous la forme de surfaces coudées à angle droit et prenant appui sur le tuyau (1).

6. Tuyau fendu longitudinalement suivant l'une des revendications précédentes, caractérisé par le fait que la languette de fixation (14) est subdivisée par une fente longitudinale (15).

7. Tuyau fendu longitudinalement suivant l'une des revendications précédentes, caractérisé par le fait que les éléments en forme de crochets (6) sont introduits radialement, de l'extérieur vers l'intérieur, par leurs languettes de fixation (14), dans les fentes (40) de la zone de fermeture le long des bords longitudinaux (2, 3).

8. Tuyau fendu longitudinalement suivant l'une des revendications 1 à 6, caractérisé par le fait que les éléments en forme de crochets (6) sont introduits radialement, de l'intérieur vers l'extérieur, par leurs languettes de fixation (14) dans les fentes (40) de la zone de fermeture le long des bords longitudinaux (2, 3), que les languettes de fixation (14) sont accrochées sur le côté extérieur du bord longitudinal (3), que les languettes de fixation (14) sont munies d'organes de recouvrement (42) qui s'étendent tangentiellement entre le bord longitudinal (3) et une partie avancée inférieure (5) et qui recouvrent la ligne de subdivision (41) du tuyau (1), et que les organes de recouvrement (42) comportent, sur leurs extrémités, des barrettes (8) dirigées radialement vers l'extérieur et sur lesquelles sont disposés les organes de fermeture (10, 12, 16, 36–37, 38–39) des éléments en forme de crochets (6).

9. Tuyau fendu longitudinalement suivant l'une des revendications précédentes, caractérisé par le fait que l'organe de fermeture (10) de l'élément en forme de crochet (6) est réalisé avec une forme cylindrique à partir d'un matériau en forme de bande et qu'au moins un organe de verrouillage (7) est formé par un élément de paroi cylindrique replié approximativement tangentiellement, le pliage s'effectuant au point que le second bord longitudinal (2) monté par enfichage par-dessus l'organe de verrouillage (7) s'encliquette au-dessous de ce dernier et que la seconde extrémité du matériau en forme de bande, réalisée en tant que second organe de fixation (14) est insérée, également, en vue de réaliser l'accrochage, dans la fente (40) du tuyau (2–3), le rebord étagé de l'organe de fermeture (10) servant de butée (11).

10. Tuyau fendu longitudinalement suivant l'une des revendications 1 à 8, caractérisé par le fait que l'organe de fermeture (12) de l'élément en forme de crochet (6) est réalisé avec une forme semi-cylindrique en un matériau en forme de bande, qu'au moins un organe de verrouillage (7) faisant saillie approximativement tangentiellement est ménagé par découpage et replié sur la face semi-cylindrique, le pliage s'effectuant jusqu'à ce que le second bord longitudinal (2) s'encliquette au-dessous de l'organe de verrouillage (7) et que l'extrémité de l'organe de fermeture (12) réalisé avec une forme semi-cylindrique est rabattue en arrière, tangentiellement, jusqu'à la hauteur de la butée (11) en tant qu'appui (13) sur la surface du tuyau (3).

11. Tuyau fendu longitudinalement suivant l'une des revendications 1 à 8, caractérisé par le fait que l'organe de fermeture saillant de l'élément en forme de crochet (6) est réalisé sous la forme d'un élément cintré (16) possédant une certaine étendue en surface, cet élément coudé (16) se terminant par son bord (23) rabattu en direction du tuyau (1) à une distance de ce dernier, qui correspond approximativement à l'épaisseur du second bord longitudinal (2), et que la courbure et la largeur de l'élément cintré (16) sont choisies de telle sorte que le bord (23) de l'élément cintré (16) s'étend au-delà de la butée et forme pour les découpes (9) du second bord longitudinal (2) respectivement un organe de verrouillage en saillie.

12. Tuyau fendu longitudinalement suivant l'une des revendications précédentes, caractérisé par le fait que des surfaces d'appui (17, 18, 20, 21, 27–28, 27–29, 30, 32, 33, 34–35) pour la partie cintrée (16) de l'organe de fermeture de l'élément en forme de crochet (6) sont rabattues de manière à être dirigées vers l'extérieur.

13. Tuyau fendu longitudinalement suivant la revendication 11 ou 12, caractérisé par le fait que la languette de fixation (14) comporte, en tant que butée (26), une surface rabattue à angle droit et qui est en appui sur la face extérieure de la zone de fermeture, que l'organe de fermeture de l'élément en forme de crochet (6) se raccorde tout d'abord sous la forme d'une surface (43) dirigée radialement vers l'extérieur, à la butée (26) et que l'extrémité de cette surface (43) se prolonge par la partie cintrée (16) de forme approximativement semi-circulaire.

14. Tuyau fendu longitudinalement suivant l'une des revendications précédentes, caractérisé par le fait que les surfaces d'appui (18) sont réalisées par découpage à partir de la butée (26) réalisée sous la forme d'une surface et sont rabattues radialement de manière à être dirigées vers l'extérieur.

15. Tuyau fendu longitudinalement suivant l'une des revendications précédentes, caractérisé par le fait que sur la surface (43), disposée radialement, de l'élément en forme de crochet (6) se trouvent ménagés des appendices saillants réalisés sous la forme de surfaces d'appui (20) qui forment les bords (11), proches du tuyau, des butées.

16. Tuyau fendu longitudinalement suivant l'une des revendications précédentes, caractérisé par le fait que les appendices saillants des surfaces d'appui (21) sont formés par découpage à partir de la surface (43) et sont repliés transversalement par rapport à la surface (43).

17. Tuyau fendu longitudinalement suivant l'une des revendications 11 à 16, caractérisé par le fait que le bord (23) de la partie cintrée (16) est réalisé sous la forme d'un élément replié en retrait (24).

18. Tuyau fendu longitudinalement suivant l'une des revendications 11 à 17, caractérisé par le fait qu'après son insertion dans la fente ménagée dans le bord longitudinal (3), l'organe de fixation (14) est relevé jusqu'à la hauteur du bord (23) de la partie cintrée (16), que la languette de fixation (14) relevée est repliée vers l'arrière en tant que surface de rigidification (25) jusqu'à la face supérieure du bord longitudinal (3), où elle est rabattue en direction de la butée (26), que la butée (26) se prolonge radialement par l'organe de fermeture de l'élément en forme de crochet (6) comportant la partie cintrée (16), le bord (23) s'étendant par-dessus la languette de fixation (14) relevée et formant l'organe de verrouillage.

19. Tuyau fendu longitudinalement suivant l'une des revendications 1 à 8 ou 12, caractérisé par le fait que l'organe de fermeture en saillie de l'élément en forme de crochet (6) est réalisé sous la forme d'une surface coudée (36–37, 39), le bord (23) de la surface (37, 39), qui est repliée en arrière jusqu'au tuyau, se terminant à une distance du tuyau (1) qui correspond approximativement à l'épaisseur du second bord longitudinal (2), et que la largeur de la surface repliée (37, 39) est choisie de telle manière que son bord (23) forme, pour les découpes (9) du second bord longitudinal (2), un organe de verrouillage saillant.

20. Tuyau fendu longitudinalement suivant l'une des revendications précédentes, caractérisé par le fait que les éléments en forme de crochets (6) sont constitués en un matériau résistant à la corrosion.

21. Tuyau fendu longitudinalement suivant l'une des revendications précédentes, caractérisé par le fait que l'un des bords longitudinaux (2, 3) comporte, sur sa face intérieure, une partie inférieure avancée (5) recouvrant la fente longitudinale (41).

22. Tuyau fendu longitudinalement suivant l'une des revendications précédentes, caractérisé par le fait que les languettes de fixation (14) sont accrochées par repliage sur le côté opposé.

23. Tuyau fendu longitudinalement suivant l'une des revendications précédentes, caractérisé par le fait que les languettes de fixation (14) sont fixées par de la colle.

24. Tuyau fendu longitudinalement suivant l'une des revendications précédentes, caractérisé par le fait que les inserts de renforcement (4) dans la zone de fermeture sont constituées par des tôles enchâssées.

25. Tuyau fendu longitudinalement suivant l'une des revendications 1 à 23, caractérisé par le fait que les inserts de renforcement (4) dans la zone de fermeture sont constitués par des tissus conservant leur forme.

26. Tuyau fendu longitudinalement suivant l'une des revendications précédentes, caractérisé par le fait que des surfaces de butée (24, 25, 27, 32, 34, 45) prévues pour la venue en butée des découpes (9) du second bord longitudinal (2) sont ménagées sur les éléments en forme de crochets (6).

FIG 1

FIG 2

FIG 3

FIG 4

FIG 5

FIG 6

FIG 7

FIG 8

FIG 9

FIG 10

6 16
23
24

11
14
15

FIG 11

6 16
23

26 25
14

FIG 12

6 16

14

26 25

FIG 13

6 16

14

26 27

FIG 14

6 16

26

28 27
14

FIG 15

6 16

29
26 27
14

# FIG 16

# FIG 17

# FIG 18

# FIG 19

# FIG 20

# FIG 21

# FIG 22

# FIG 24

# FIG 23